# FASCICULE DE BREVET EUROPEEN

(11) **EP 2 985 635 B1**
(45) Date de publication et mention de la délivrance du brevet: **01.08.2018**
(21) Numéro de dépôt: 15180473.9
(22) Date de dépôt: 11.08.2015
(51) Int. Cl.: G01V 8/20, G01T 1/167, G01V 3/10

(54) **PORTIQUE DE CONTROLE D'ACCES**
SCHRANKE ZUR ZUGANGSKONTROLLE
ACCESS CONTROL GATE

(30) Priorité: 14.08.2014 FR 1457832
(43) Date de publication de la demande: 17.02.2016
(73) Titulaire: Costruzioni Elettroniche Industriali Automatismi S.p.A. C.E.I.A. S.P.A., 52041 Civitella in Val di Chiana Arezzo (IT)
(72) Inventeur: MANNESCHI, Alessandro, 52100 AREZZO (IT)
(74) Mandataire: Regimbeau

(56) Documents cités:
- EP-A1- 2 202 700
- EP-A1- 2 204 671
- EP-A1- 2 402 914
- EP-A1- 2 575 118

## Description

La présente invention concerne le domaine des portiques de contrôle d'accès.

L'invention trouve par exemple application dans le contrôle d'accès des salles d'embarquement d'aéroports ou de l'accès à des Administrations ou Institutions sensibles, sans que ces applications ne soient limitatives.

On a déjà proposé de nombreux portiques de contrôle d'accès de zones protégées.

On trouvera des exemples de portiques de contrôle d'accès dans les documents FR 2 775 350, EP 1 394 570, EP 1 750 147, US 7 592 907.

D'autres exemples de portiques sont décrits dans les documents EP 2402914 et EP 2202700.

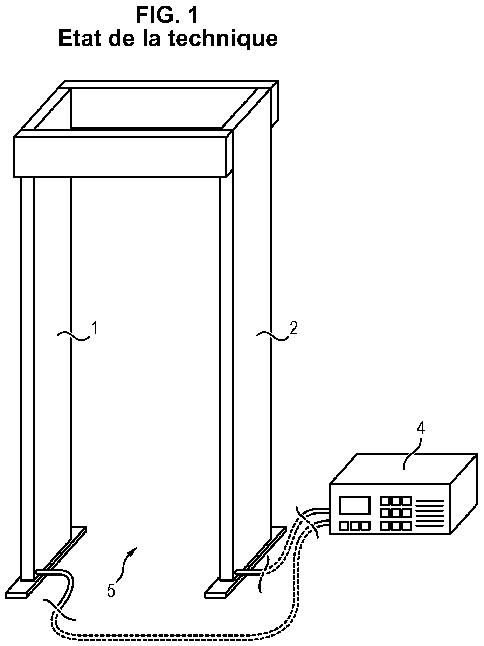

Généralement les portiques de contrôle d'accès définissent, comme illustré sur la figure 1 annexée, un couloir ou canal de passage 5 encadré par deux panneaux ou colonnes 1, 2. Les panneaux ou colonnes 1, 2 comprennent des capteurs adaptés pour détecter différents types de substances ou matériaux susceptibles d'être portés par les individus qui transitent par le portique.

Ces capteurs peuvent comprendre des bobinages associés à des moyens 4 formant générateurs pour émettre un champ électromagnétique susceptible de détecter des métaux portés par des individus qui transitent par le portique, par analyse de perturbations détectées sur les bobinages par des moyens logiques intégrés aux moyens 4.

Certains portiques sont également équipés de moyens d'analyse de substances ou molécules chimiques particulières, ou encore de rayonnements ionisants tel que des rayonnements gamma.

Les portiques de contrôle d'accès connus ont déjà rendu de grands services. Cependant ils ne donnent pas toujours totalement satisfaction.

En particulier lors de flux de passages important, il arrive fréquemment que plusieurs individus qui se suivent à des distances rapprochées conduisent à des perturbations dans la détection en raison de leur proximité.

Il arrive en particulier que l'on attribue à un individu transitant par un portique une alarme liée en réalité à un individu qui le suit ou qui le précède.

Les contrôles individuels qui sont alors nécessaires sont à la fois perturbants pour les individus concernés, complexes et sources de retard dans l'accès.

La présente invention a pour but d'améliorer la situation.

Ce but est atteint selon l'invention grâce à un portique de contrôle d'accès du type défini en revendication 1 annexée.

Selon d'autres caractéristiques avantageuses de l'invention :
- Les barrières de détection sont des barrières optiques,
- Le nombre de barrières de détection est supérieur à 3,
- Le nombre de barrières de détection est égal à 4,
- Il est prévu deux barrières en amont et deux barrières en aval des capteurs de détection,
- Les moyens logiques sont adaptés pour rechercher les corrélations existants entre les pics de signaux issus des capteurs de détection de substances ou matériaux et l'activation simultanée de deux barrières situées les plus au centre du passage défini dans le couloir ou canal du portique.

D'autres caractéristiques, buts et avantages de la présente invention apparaîtront à la lecture de la description détaillée qui va suivre et en regard des dessins annexés donnés à titre d'exemple non limitatif et sur lesquels :
- La figure 1 représente une vue schématique en perspective d'un portique de contrôle d'accès connu de l'état de la technique,
- Les figures 2.1 à 2.9 représentent schématiquement 9 séquences successives de passage d'un portique par un individu dépourvu de substance ou matériau dangereux, suivi d'un individu portant une source de rayonnement ionisant,
- La figure 3 illustre schématiquement la corrélation existant entre le signal issu d'un capteur de substances ou matériaux et l'activation des barrières de détection dans la suite des neuf séquences précitées,
- Les figures 4.1 à 4.9 représentent neuf séquences successives homologues de la figure 2 dans la cas du passage à travers le portique d'un individu portant une source de rayonnement ionisant,
- La figure 5 représente la corrélation entre le signal issu d'un capteur de substances ou matériaux et l'activation des barrières dans la suite des neuf séquences des figures 4,
- Les figures 6.1 à 6.9 représentent neuf séquences successives illustrant le passage à travers le portique d'un individu dépourvu de matériau ou substance dangereuses, suivant un individu portant une source de rayonnement ionisant, et
- La figure 7 représente la corrélation existant entre le signal issu d'un capteur de substances ou matériaux et l'activation des barrières de détection correspondantes selon les séquences illustrées sur les figures 6.

La structure générale des portiques conformes à l'invention formés de deux panneaux ou colonnes 1, 2 encadrant un couloir ou canal de transfert 5 ainsi que les capteurs formant détecteur de métaux ou tout autre type de substances, y compris des rayonnements ionisant, notamment gamma, est connue de l'homme de l'art et ne sera pas décrite dans le détail par la suite.

On pourra se référer à titre d'exemple non limitatif aux documents précités FR 2 775 350, EP 1 394 570, EP 1 750 147, US 7 592 907.

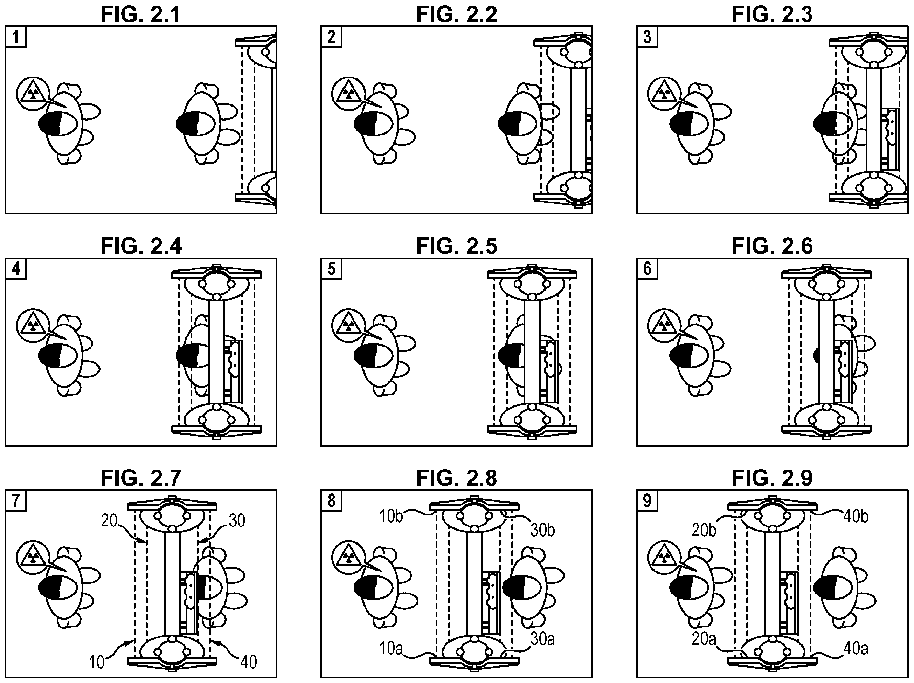

Comme on le voit sur les figures 2, 4 et 6 annexées, selon l'invention le portique est équipé d'une pluralité de barrières optiques 10, 20, 30, 40 réparties le long de la direction de passage dans le portique.

On entend par « réparties le long de la direction de passage dans le portique », une disposition des barrières 10, 20, 30, 40 telle que lesdites barrières sont successivement franchies lorsqu'un individu traverse normalement le portique en se déplaçant de l'entrée vers la sortie, voire dans le sens inverse.

Chaque barrière optique 10, 20, 30, 40 est de préférence formée d'une cellule émettrice 10a, 20a, 30a, 40a située d'un côté du couloir ou canal de passage et d'une cellule réceptrice respectivement associée 10b, 20b, 30b, 40b située sur le côté opposé.

Plus précisément les cellules émettrices et réceptrices 10a, 20a, 30a, 40a ; 10b, 20b, 30b, 40b peuvent être formées d'une barrette définissant un rideau optique globalement vertical couvrant l'essentiel de la hauteur du couloir ou canal de transfert 5. En variante chaque barrière optique 10, 20, 30, 40 peut être formée d'une pluralité de cellules émettrices 10a, 20a, 30a, 40a et de cellules réceptrices respectives 10b, 20b, 30b, 40b réparties sur la hauteur du couloir ou canal 5 afin de détecter en toute certitude le passage d'un individu quelle que soit la position de celui-ci, c'est-à-dire que l'individu se tienne en position debout normale ou par exemple dans une position recroquevillée voire allongée quelconque.

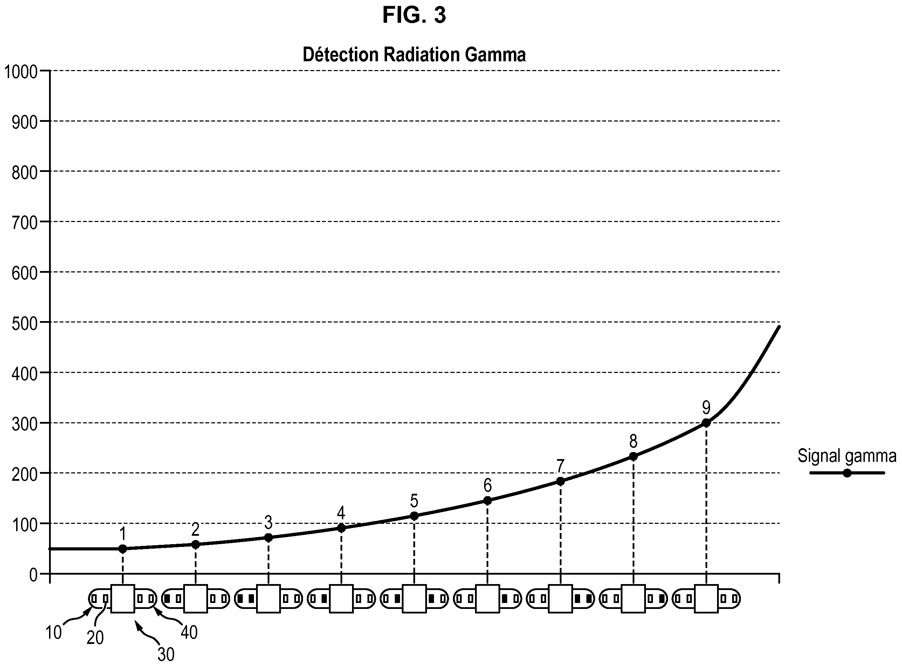

Sur les figures 3, 5 et 7 on a illustré sous forme de pavés clairs les barrières optiques 10, 20, 30, 40 correspondant à une position désactivée c'est-à-dire non détection d'un individu en regard et sous forme de pavés noircis les barrières activées correspondant à la détection d'un individu.

Sur les figures 3, 5 et 7 on a par ailleurs représentées le signal issu des capteurs de substances ou matériaux.

L'homme de l'art comprendra à l'examen de la figure 2 et de la figure 3 que lors du passage à travers le portique d'un individu dépourvu de substance ou matériau dangereux, suivi d'un individu portant une source de rayonnement ionisant, le signal issu des capteurs de substance ou matériau croit progressivement en intensité, le signal étant maximal lorsque l'individu porteur de la source ionisante est proche de l'entrée du portique alors que l'individu qui traverse le portique est détecté en séquence de sortie du portique.

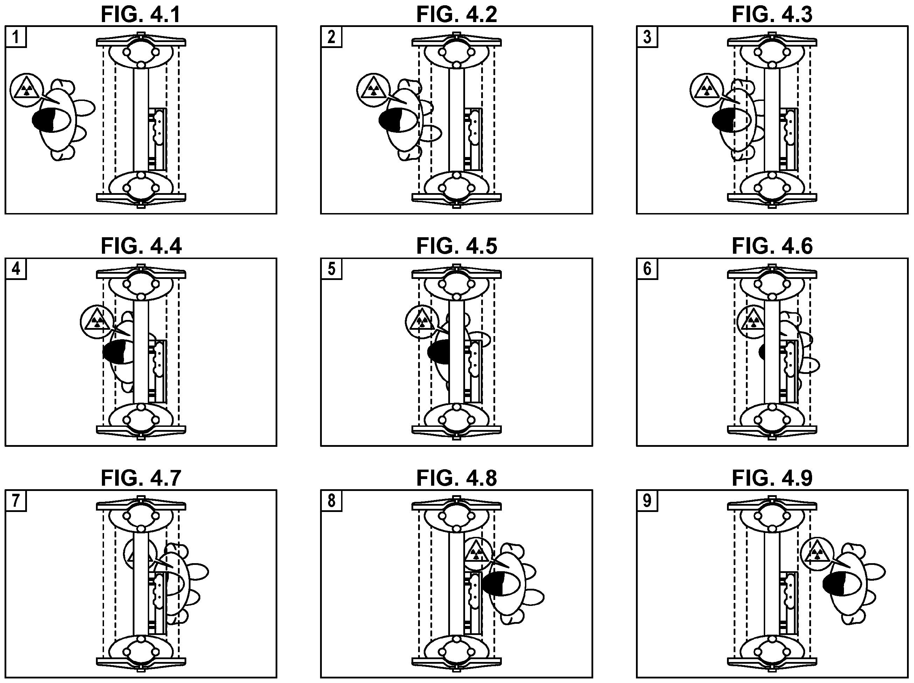

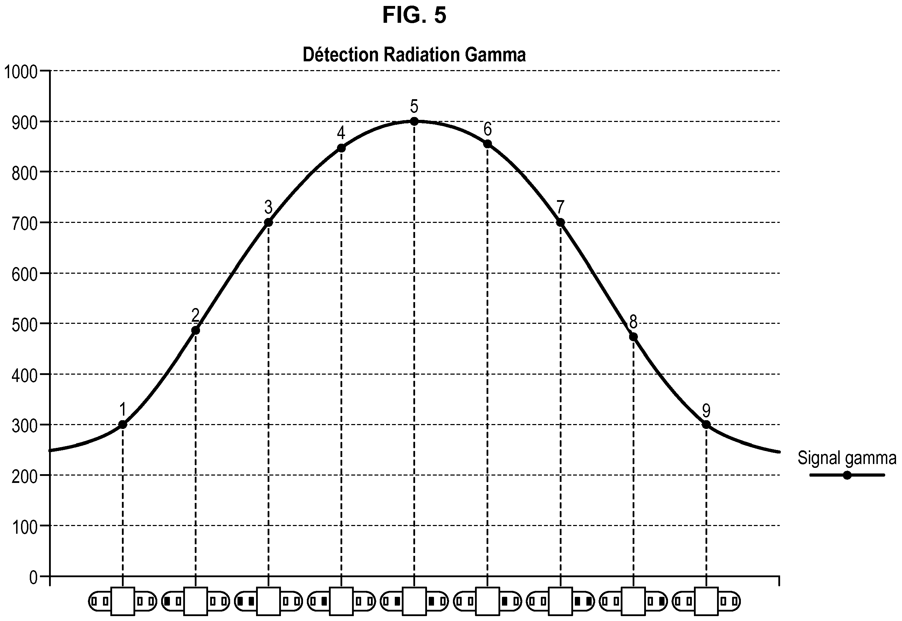

L'on observera à l'examen des figures 4 et 5 que le même signal continue à croître lorsque l'individu portant la source de rayonnement ionisant franchit le portique. Ce signal connait un pic ou maximum, lorsque l'individu se trouve au centre du portique, c'est-à-dire lorsque les deux barrières 20, 30 les plus centrales dans le sens du passage sont simultanément activées. Puis l'amplitude du signal décroit lorsque l'individu franchit la sortie du portique.

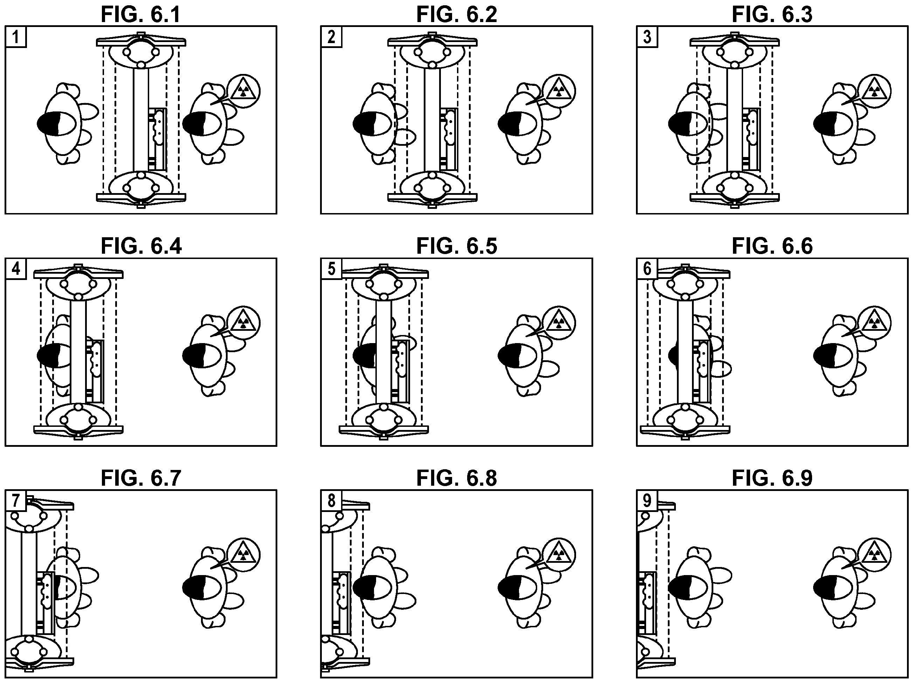

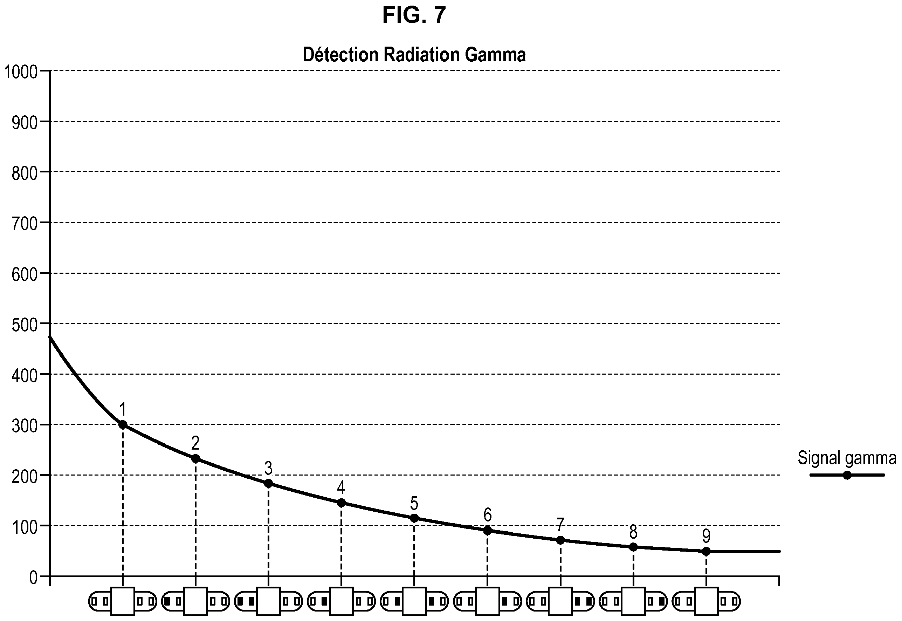

Enfin l'on comprendra à l'examen des figures 6 et 7 que le signal des capteurs de substances ou matériaux décroit progressivement lorsque l'individu portant la source de rayonnement ionisant a franchi le portique et s'en éloigne alors que le portique est franchi par un nouvel individu dépourvu de substance ou matériau dangereux.

Le portique conforme à l'invention est en outre pourvu de moyens logiques, intégrés aux moyens 4, adaptés pour déterminer à partir de la succession d'activations des barrières 10, 20, 30, 40, d'une part la place et le déplacement d'un individu quelconque dans le couloir ou canal 5 du portique et d'autre part les corrélations existantes entre le déplacement d'un individu et les signaux issus des capteurs de détection de substance ou de matériau.

Lorsque comme il est illustré sur les figures 2 et 3 le signal issu des capteurs de substances ou de matériaux croit progressivement en corrélation avec la détection d'un individu qui franchit le portique, l'amplitude du signal étant maximale lorsque l'individu est détecté sortant du portique, on est vraisemblablement en présence d'un individu porteur d'une substance ou matériau à contrôler qui s'approche du portique sans avoir franchi celui-ci.

Lorsque comme illustré sur les figures 4 et 5 on est en présence d'un signal issu des capteurs de détection des substances ou matériaux qui croit jusqu'à la localisation d'un individu au centre du portique et décroit progressivement ensuite lorsque l'individu sort du portique, on est vraisemblablement en présence d'un individu qui est en cours de franchir le portique et qui porte une substance ou matériau à contrôler.

Enfin comme illustré sur les figures 6 et 7 lorsque le signal issu des capteurs de substances ou matériaux décroit progressivement lors de la détection du franchissement du portique par un individu l'on est vraisemblablement en présence d'un individu qui a franchi précédemment le portique et qui porte une substance ou matériau à contrôler.

Dans le cadre de l'invention comme montré sur les figures il est prévu de préférence un nombre de barrières supérieur à 3 pour permettre une détection fine de la localisation d'un individu lors du franchissement d'un portique.

Plus précisément dans le cadre de l'invention il est prévu de préférence 4 barrières optiques réparties le long de la direction de passage dans le portique à raison de 2 barrières optiques 10, 20 en amont des capteurs de détection de substances ou matériaux, soit à l'entrée du portique, et 2 barrières optiques en aval des capteurs de détection de substances ou de matériaux, soit à la sortie du portique.

Ainsi lors d'un passage normal à travers un couloir 5 du portique, de l'entrée vers la sortie, un individu est successivement détecté par la barrière d'entrée 10, puis la deuxième barrière 20, la troisième barrière 30 et enfin la barrière de sortie 40.

Plus précisément encore selon la présente invention, de préférence l'écart séparant au moins les deux premières barrières 10, 20 entre elles et la distance séparant au moins les deux dernières barrières 30, 40 entre elles est telle qu'un individu est encore détecté par la barrière amont 10 ou 30 par exemple lorsqu'il est détecté par la barrière suivante 20 ou 40. Cette disposition permet de détecter tout déplacement suspect non régulier d'un individu au sein du portique.

La disposition précitée permet également de détecter toute tentative de retour en arrière au sein d'un portique qui peut être considérée comme un comportement suspect.

En pratique la distance séparant deux barrières successives 10, 20, 30, 40 est de préférence comprise entre 15 et 30cm, typiquement de l'ordre de 20 cm.

Bien entendu la présente invention n'est pas limitée aux modes de réalisations particuliers qui viennent d'être décrits mais s'étend à toute variante conforme à son esprit.

En particulier on peut bien entendu prévoir un nombre de barrières optiques différent du mode de réalisation préférentiel précédemment décrit, tout particulièrement un nombre de barrières supérieur à 4.

Le cas échéant les barrières 10, 20, 30, 40 peuvent également être formées d'une autre technologie que la technologie optique. La notion de « pluralité de barrières de détection réparties le long de la direction de passage dans le portique » doit donc être comprise dans un sens large comme englobant tous moyens permettant de remplir cette fonction. La détection peut également être renforcée ou affinée à l'aide d'une caméra unique correctement placée, dont la résolution en pixels est adaptée et qui est couplée à des moyens de traitement du signal issu de la caméra, permettant de détecter par analyse de pixels le passage successif par une suite de barrières fictives correspondant à la localisation des barrières décrites dans la description qui précède.

De même le portique conforme à la présente invention peut être équipé d'un système de type Doppler permettant de connaître la place et le déplacement d'un individu dans le portique.

## Revendications

1. Portique de contrôle d'accès à des individus comprenant deux panneaux ou colonnes (1, 2) qui définissent un couloir de passage (5), lesquels panneaux ou colonnes (1, 2) sont équipés de capteurs adaptés pour détecter des substances ou matériaux susceptibles d'être portés par des individus qui transitent par le portique, le portique étant équipé d'une pluralité de barrières de détection d'individus (10, 20, 30, 40) réparties le long de la direction de passage dans le portique et des moyens logiques (4) associés à la pluralité de barrières, **caractérisé par le fait que** lesdits moyens logiques (4) sont adaptés d'une part pour déterminer à partir de la succession d'activations des dites barrières (10, 20, 30, 40), la place et le déplacement d'un individu et d'autre part pour établir les corrélations existantes entre le déplacement d'un individu et les signaux issus des capteurs de détection de substance ou de matériaux, les moyens logiques (4) étant adaptés pour détecter la corrélation entre un pic issu des capteurs de substances ou de matériaux et l'activation simultanée de deux barrières (20, 30) situées les plus au centre du portique.

2. Portique selon la revendication 1, **caractérisé par le fait que** les barrières (10, 20, 30, 40) sont des barrières optiques.

3. Portique selon l'une des revendications 1 ou 2, **caractérisé par le fait que** le nombre de barrières (10, 20, 30, 40) est supérieur à 3.

4. Portique selon l'une des revendications 1 à 3, **caractérisé par le fait que** le nombre de barrières (10, 20, 30, 40) est égal à 4.

5. Portique selon l'une des revendications 1 à 4, **caractérisé par le fait qu'**il comprend deux barrières (10, 20) en amont des capteurs de substance ou de matériaux et deux barrières (30, 40) en aval des capteurs de substances ou de matériaux.

6. Portique selon l'une des revendications 1 à 5, **caractérisé par le fait que** la distance séparant deux barrières successives (10, 20, 30, 40) dans le sens du passage le long du couloir ou canal (5) du portique est comprise entre 15 et 30 centimètres, typiquement de l'ordre de 20 centimètres.

7. Portique selon l'une des revendications 1 à 6, **caractérisé par le fait que** chaque barrière (10, 20, 30, 40) est adaptée pour assurer une détection sur la quasi-totalité de la hauteur du couloir ou canal de passage (5).

8. Portique selon l'une des revendications 1 à 7, **caractérisé par le fait que** les barrières (10, 20, 30, 40) sont des barrières optiques et chaque barrière optique (10, 20, 30, 40) est formée d'un rideau de détection permettant de couvrir la quasi-totalité de la hauteur du couloir ou canal de passage (5).

9. Portique selon l'une des revendications 1 à 7, **caractérisé par le fait que** les barrières (10, 20, 30, 40) sont des barrières optiques et chaque barrière optique (10, 20, 30, 40) est formée d'une pluralité de faisceaux ponctuels permettant de couvrir la quasi-totalité de la hauteur du couloir ou canal de passage (5).

10. Portique selon l'une des revendications 1 à 9, **caractérisé par le fait que** les moyens logiques (4) sont adaptés pour détecter le franchissement successif des différentes barrières de détection (10, 20, 30, 40) réparties le long de la direction de passage dans le portique.

11. Portique selon l'une des revendications 1 à 10, **caractérisé par le fait que** les moyens logiques (4) sont adaptés pour détecter le franchissement successif d'une première barrière d'entrée (10), puis une deuxième barrière (20), et ainsi de suite jusqu'à une barrière de sortie (40).

12. Portique selon l'une des revendications 1 à 11, **caractérisé par le fait que** l'écart séparant au moins deux premières barrières (10, 20) entre elles et la distance séparant au moins deux dernières barrières (30, 40) entre elles, sont tels qu'un individu est encore détecté par une barrière amont (10, 30) lorsqu'il est détecté par la barrière suivante (20, 40).

13. Portique selon l'une des revendications 1 à 12, **caractérisé par le fait que** les moyens logiques (4) sont adaptés pour identifier une tentative de retour en arrière au sein du portique, lorsque la détection ne correspond pas à un franchissement successif des différentes barrières de détection (10, 20, 30, 40) réparties le long de la direction de passage dans le portique.

14. Portique selon l'une des revendications 1 à 13, **caractérisé par le fait que** les moyens logiques (4) sont adaptés pour identifier un état de présence d'un individu porteur d'une substance ou matériau à contrôler qui s'approche du portique sans avoir franchi celui-ci, lorsque le signal issu des capteurs de substances ou de matériaux croit progressivement en corrélation avec la détection d'un individu qui franchit le portique, l'amplitude du signal étant maximale lorsque l'individu est détecté sortant du portique.

15. Portique selon l'une des revendications 1 à 14, **caractérisé par le fait que** les moyens logiques (4) sont adaptés pour identifier un état de présence d'un individu qui est en cours de franchir le portique et qui porte une substance ou matériau à contrôler, lorsque le signal issu des capteurs de détection des substances ou matériaux croit jusqu'à la localisation d'un individu au centre du portique et décroit progressivement ensuite lorsque l'individu sort du portique.

16. Portique selon l'une des revendications 1 à 15, **caractérisé par le fait que** les moyens logiques (4) sont adaptés pour identifier un état de présence d'un individu qui a franchi précédemment le portique et qui porte une substance ou matériau à contrôler, lorsque le signal issu des capteurs de substances ou matériaux décroit progressivement lors de la détection du franchissement du portique par un individu.

## Patentansprüche

1. Zugangskontrollportal für Personen, das zwei Tafeln oder Säulen (1, 2) umfasst, die einen Durchgangskorridor (5) definieren, wobei die Tafeln oder Säulen (1, 2) mit geeigneten Sensoren ausgestattet sind, die Substanzen oder Materialien erkennen, die von Personen bei sich getragen werden können, die das Portal passieren, wobei das Portal mit einer Mehrzahl von Personenerkennungsschranken (10, 20, 30, 40) ausgerüstet ist, die entlang der Durchgangsrichtung im Portal verteilt sind, und mit Logikmitteln (4), die der Mehrzahl von Schranken zugeordnet sind,
**dadurch gekennzeichnet, dass** die Logikmittel (4) einerseits geeignet sind, aus der Abfolge von Aktivierungen der Schranken (10, 20, 30, 40) den Ort und die Bewegung einer Person zu bestimmen und andererseits die bestehenden Korrelationen zwischen der Bewegung einer Person und den Signalen herzustellen, die von den Substanz- oder Materialerkennungssensoren kommen, wobei die Logikmittel (4) geeignet sind, die Korrelation zwischen einer von den Substanz- oder Materialsensoren kommenden Spitze und der gleichzeitigen Aktivierung von zwei Schranken (20, 30) zu erkennen, die sich weitgehend in der Mitte des Portals befinden.

2. Portal nach Anspruch 1, **dadurch gekennzeichnet, dass** die Schranken (10, 20, 30, 40) Lichtschranken sind.

3. Portal nach einem der Ansprüche 1 oder 2, **dadurch gekennzeichnet, dass** die Anzahl der Schranken (10, 20, 30, 40) größer als 3 ist.

4. Portal nach einem der Ansprüche 1 bis 3, **dadurch gekennzeichnet, dass** die Anzahl der Schranken (10, 20, 30, 40) gleich 4 ist.

5. Portal nach einem der Ansprüche 1 bis 4, **dadurch gekennzeichnet, dass** es zwei Schranken (10, 20) vor den Substanz- oder Materialsensoren und zwei Schranken (30, 40) nach den Substanz- oder Materialsensoren umfasst.

6. Portal nach einem der Ansprüche 1 bis 5, **dadurch gekennzeichnet, dass** der Abstand zwischen zwei aufeinanderfolgenden Schranken (10, 20, 30, 40) in Durchgangsrichtung entlang des Korridors oder Kanals (5) des Portals zwischen 15 und 30 Zentimetern liegt, typischerweise in der Größenordnung von 20 Zentimetern.

7. Portal nach einem der Ansprüche 1 bis 6, **dadurch gekennzeichnet, dass** jede Schranke (10, 20, 30, 40) geeignet ist, eine Erkennung über nahezu die gesamte Höhe des Korridors oder Durchgangskanals (5) zu gewährleisten.

8. Portal nach einem der Ansprüche 1 bis 7, **dadurch gekennzeichnet, dass** die Schranken (10, 20, 30, 40) Lichtschranken sind und jede Lichtschranke durch einen Erkennungsvorhang ausgebildet ist, der nahezu die gesamte Höhe des Korridors oder Durchgangskanals (5) abdecken kann.

9. Portal nach einem der Ansprüche 1 bis 7, **dadurch gekennzeichnet, dass** die Schranken (10, 20, 30, 40) Lichtschranken sind und jede Lichtschranke (10, 20, 30, 40) durch eine Mehrzahl von Punktstrahlen gebildet wird, die nahezu die gesamte Höhe des Korridors oder Durchgangskanals (5) abdecken können.

10. Portal nach einem der Ansprüche 1 bis 9, **dadurch gekennzeichnet, dass** die Logikmittel (4) geeignet sind, das aufeinanderfolgende Durchqueren der einzelnen Erkennungsschranken (10, 20, 30, 40) zu erfassen, die entlang der Durchgangsrichtung im Portal verteilt sind.

11. Portal nach einem der Ansprüche 1 bis 10, **dadurch gekennzeichnet, dass** die Logikmittel (4) geeignet sind, das aufeinanderfolgende Durchqueren einer ersten Eingangsschranke (10), dann einer zweiten Schranke (20) und so weiter bis zu einer Ausgangsschranke (40) zu erkennen.

12. Portal nach einem der Ansprüche 1 bis 11, **dadurch gekennzeichnet, dass** der Abstand zwischen zumindest zwei ersten Schranken (10, 20) und der Abstand zwischen zumindest zwei letzten Schranken (30, 40) derart ist, dass eine Person noch von einer vorherigen Schranke (10, 30) erkannt wird, wenn sie von der nächsten Schranke (20, 40) erfasst wird.

13. Portal nach einem der Ansprüche 1 bis 12, **dadurch gekennzeichnet, dass** die Logikmittel (4) geeignet sind, einen Umkehrversuch innerhalb des Portals zu identifizieren, wenn die Erkennung keinem aufeinanderfolgenden Durchqueren der einzelnen Erkennungsschranken (10, 20, 30, 40) entspricht, die entlang der Durchgangsrichtung im Portal verteilt sind.

14. Portal nach einem der Ansprüche 1 bis 13, **dadurch gekennzeichnet, dass** die Logikmittel (4) geeignet sind, einen Anwesenheitszustand einer Person zu identifizieren, die eine zu kontrollierende Substanz oder ein solches Material bei sich trägt, die sich dem Portal nähert, ohne es durchquert zu haben, wenn sich das von den Substanz- oder Materialsensoren kommende Signal in Korrelation mit der Erkennung einer das Portal durchquerenden Person allmählich verstärkt, wobei die Amplitude des Signals maximal ist, wenn die Person beim Verlassen des Portals erkannt wird.

15. Portal nach einem der Ansprüche 1 bis 14, **dadurch gekennzeichnet, dass** die Logikmittel (4) geeignet sind, einen Anwesenheitszustand einer Person zu identifizieren, die gerade das Portal durchquert, und die eine zu kontrollierende Substanz oder ein solches Material bei sich trägt, wenn sich das von den Substanz- oder Materialerkennungssensoren kommende Signal verstärkt, bis sich eine Person in der Mitte des Portals befindet und sich dann allmählich abschwächt, wenn die Person das Portal verlässt.

16. Portal nach einem der Ansprüche 1 bis 15, **dadurch gekennzeichnet, dass** die Logikmittel (4) geeignet sind, einen Anwesenheitszustand einer Person zu identifizieren, die vorher das Portal durchquert, und die eine zu kontrollierende Substanz oder ein solches Material bei sich trägt, wenn sich das von den Substanz- oder Materialsensoren kommende Signal nach der Erkennung der Durchquerung des Portals durch eine Person allmählich abschwächt.

## Claims

1. An individual access control portal comprising two panels or columns (1, 2) that define a through corridor, which panels or columns (1, 2) are equipped with sensors adapted to detect substances or materials liable to be carried by individuals travelling through the portal, the portal being equipped with a plurality of individual detection barriers (10, 20, 30, 40) distributed along the direction of passage through the portal and logic means (4) attached to the plurality of barriers,
**characterized in that** said logic means (4) are adapted firstly to determine from the series of activations of said barriers (10, 20, 30, 40) the place and movement of an individual and secondly to establish the correlations existing between the movement of an individual and the signals output by the substance or material detection sensors, the logic means (4) being adapted to detect the correlation between a peak output by the substance or material sensors and the simultaneous activation of two barriers (20, 30) located the nearest to the center of the portal.

2. The portal according to claim 1, **characterized in that** the barriers (10, 20, 30, 40) are optical barriers.

3. The portal according to any one of claims 1 or 2, **characterized in that** the number of the barriers (10, 20, 30, 40) is greater than 3.

4. The portal according to any one of claims 1 to 3, **characterized in that** the number of the barriers (10, 20, 30, 40) is equal to 4.

5. The portal according to any one of claims 1 to 4, **characterized in that** it comprises two barriers (10, 20) upstream of the substance or material sensors and two barriers (30, 40) downstream of the substance or material sensors.

6. The portal according to any one of claims 1 to 5, **characterized in that** the distance separating two successive barriers (10, 20, 30, 40) in the direction of passage along the corridor or channel (5) of the portal is between 15 and 30 centimeters, typically in the order of 20 centimeters.

7. The portal according to any one of claims 1 to 6, **characterized in that** each barrier (10, 20, 30, 40) is adapted to provide detection over almost the whole height of the passage corridor or channel (5).

8. The portal according to any one of claims 1 to 7, **characterized in that** the barriers are optical barriers (10, 20, 30, 40) and each optical barrier (10, 20, 30, 40) is formed by a detection curtain making it possible to cover almost the whole height of the passage corridor or channel (5).

9. The portal according to any one of claims 1 to 7, **characterized in that** the barriers (10, 20, 30, 40) are optical barriers and each optical barrier (10, 20, 30, 40) is formed by a plurality of intermittent beams making it possible to cover almost the whole height of the passage corridor or channel (5).

10. The portal according to any one of claims 1 to 9, **characterized in that** the logic means (4) are adapted to detect the successive crossing of the different detection barriers (10, 20, 30, 40) distributed along the direction of passage through the portal.

11. The portal according to any one of claims 1 to 10, **characterized in that** the logic means (4) are adapted to detect the successive crossing of a first entrance barrier (10), then a second barrier (20), and so on up to an exit barrier (40).

12. The portal according to any one of claims 1 to 11, **characterized in that** the gap separating at least two first barriers (10, 20) from each other and the distance separating at least two last barriers (30, 40) from each other are such that an individual is still detected by an upstream barrier (10, 30) when it is detected by the next barrier (20, 40).

13. The portal according to any one of claims 1 to 12, **characterized in that** the logic means (4) are adapted to identify an attempt to return backwards inside the portal, when the detection does not correspond to a successive crossing of the different detection barriers (10, 20, 30, 40) distributed along the direction of passage through the portal.

14. The portal according to any one of claims 1 to 13, **characterized in that** the logic means (4) are adapted to identify a state of presence of an individual carrying a substance or material to be checked is approaching the portal without having crossed it, when the signal output by the substance or material detection sensors gradually increases in correlation with the detection of an individual crossing the portal, the amplitude of the signal being at a maximum when the individual is detected exiting the portal.

15. The portal according to any one of claims 1 to 14, **characterized in that** the logic means (4) are adapted to identify a state of presence of an individual crossing the portal and carrying a substance or material to be checked, when the signal output by the substance or material detection sensors increases until an individual is located at the center of the portal, and then gradually decreases when the individual leaves the portal.

16. The portal according to any one of claims 1 to 14, **characterized in that** the logic means (4) are adapted to identify a state of presence of an individual who has previously cross the portal and is carrying a substance or material to be checked, when the signal output by the substance or material detection sensors gradually decreases upon detection of the crossing of the portal by an individual.
